(19) Europäisches Patentamt
European Patent Office
Office européen des brevets

(11) EP 4 797 340 A1

(12) **EUROPEAN PATENT APPLICATION**

(43) Date of publication:
**26.08.2026 Bulletin 2026/35**

(21) Application number: **26157719.1**

(22) Date of filing: **11.02.2026**

(51) International Patent Classification (IPC):
***H01M 4/131*** *(2010.01)* ***H01M 4/36*** *(2006.01)*
***H01M 4/525*** *(2010.01)* ***H01M 10/052*** *(2010.01)*

(52) Cooperative Patent Classification (CPC):
**H01M 4/131; H01M 4/364; H01M 4/525; H01M 10/052;** H01M 2004/021; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.02.2025 KR 20250021696**

(71) Applicant: **SAMSUNG SDI CO., LTD.**
**Yongin-si, Gyeonggi-do 17084 (KR)**

(72) Inventors:
- **KANG, Minkyeong**
  **17084 Yongin-si (KR)**
- **OH, Yuntaek**
  **17084 Yongin-si (KR)**

(74) Representative: **Maiwald GmbH**
**Elisenhof**
**Elisenstraße 3**
**80335 München (DE)**

(54) **COMPOSITE POSITIVE ELECTRODE ACTIVE MATERIALS, POSITIVE ELECTRODES, AND RECHARGEABLE LITHIUM BATTERIES**

(57) A composite positive electrode active material for a rechargeable lithium battery includes a composite positive electrode active material including a first positive electrode active material in a form of single particles and including a lithium nickel-based composite oxide and a second positive electrode active material in a form of secondary particles in which primary particles are agglomerated and including a lithium nickel-based composite oxide. The first positive electrode active material is included in an amount of more than about 50 wt% and less than about 100 wt% based on 100 wt% of the composite positive electrode active material. The second positive electrode active material is included in an amount of greater than 0 wt% and less than about 50 wt% based on 100 wt% of the composite positive electrode active material.

FIG. 1

60
100
10
40
30
20
50

EP 4 797 340 A1

## Description

## BACKGROUND

### 1. Field

Composite positive electrode active materials, positive electrodes, and rechargeable lithium batteries are disclosed.

### 2. Description of the Related Art

Rechargeable lithium batteries are used in portable information devices such as cell phones, laptop computers, smart phones, and the like. Rechargeable lithium batteries having high energy density are also used in electric vehicles as a driving power source. Further research has been conducted to use a rechargeable lithium battery with high energy density as a driving power source for hybrid or electric vehicles or power storage power source.

Various positive electrode active materials have been investigated to realize rechargeable lithium batteries for various uses. Among such materials, lithium nickel-based composite oxides (e.g., lithium nickel manganese cobalt oxide, lithium nickel cobalt aluminum oxide, etc.), lithium cobalt oxide, and lithium iron phosphate-based compounds are used as positive electrode active materials. Of these materials, high-nickel positive electrode active materials with a nickel amount of approximately 80 mol% or more can realize high energy density and has been developed. However, cycle-life of batteries with such material may deteriorate due to various problems such as structural deterioration due to charge/-discharge, surface side reactions with the electrolyte, and particle cracks.

## SUMMARY

A composite positive electrode active material that improves powder resistivity is provided by mixing a lithium nickel-based composite oxide in a form of single particles and a lithium nickel-based composite oxide in a form of secondary particles. By including such a composite positive electrode active material, a positive electrode and a rechargeable lithium battery are provided that can significantly improve the electrical resistance of the electrode while having excellent cycle-life characteristics and rate capability.

According to embodiments, a composite positive electrode active material includes a first positive electrode active material in a form of single particles and including a lithium nickel-based composite oxide, and a second positive electrode active material in a form of secondary particles in which primary particles are agglomerated and including a lithium nickel-based composite oxide, wherein the first positive electrode active material is included in an amount of more than about 50 wt% and less than about 100 wt% based on 100 wt% of the composite positive electrode active material, and the second positive electrode active material is included in an amount of greater than 0 wt% and less than about 50 wt% based on 100 wt% of the composite positive electrode active material.

According to some embodiments, a positive electrode includes a positive electrode current collector, and a positive electrode active material layer disposed on the positive electrode current collector and including the composite positive electrode active material.

According to some embodiments, a rechargeable lithium battery comprises the aforementioned positive electrode, a negative electrode, and an electrolyte.

According to some embodiments, a composite positive electrode active material can improve powder resistivity by mixing the lithium nickel-based composite oxide in the form of single particles and the lithium nickel-based composite oxide in the form of secondary particles.

According to some embodiments, a positive electrode and a rechargeable lithium battery can have significantly improved electrical resistance of the electrode while also having excellent cycle-life characteristics and rate capability by including the aforementioned composite positive electrode active material.

## BRIEF DESCRIPTION OF THE DRAWINGS

FIGS. 1 to 4 are schematic views showing rechargeable lithium batteries according to embodiments of the present disclosure.

FIG. 5 is a graph showing the pressure-dependent resistivity of the composite positive electrode active materials prepared in Examples 1 to 3 and Comparative Examples 1 to 3.

FIG. 6 is a graph showing the mixture resistivities and interfacial resistances of the positive electrodes made in

Examples 1 to 3 and Comparative Examples 1 to 3.

FIG. 7 is a graph showing the discharge specific capacity according to the cycle when charging at a 1.0 C-rate and discharging at a 1.0 C-rate at room temperature of the rechargeable lithium battery cells of Examples 1 to 3 and Comparative Examples 1 to 3 was repeated 50 times.

FIG. 8 is a graph showing the capacity retention rate according to the cycle when charging at a 1.0 C-rate and discharging at a 1.0 C-rate at room temperature of the rechargeable lithium battery cells of Examples 1 to 3 and Comparative Examples 1 to 3 was repeated 50 times.

FIG. 9 is a graph showing the discharge specific capacity and capacity retention rate at 50 cycles according to the ratios of the second positive electrode active material in the form of secondary particles in Examples 1 to 3 and Comparative Examples 1 to 3.

FIGS. 10 and 11 are graphs showing room temperature rate capability of rechargeable lithium battery cells of Examples 1 to 3 and Comparative Examples 1 to 3.

FIG. 12 is a graph showing the discharge specific capacity and capacity retention rate at 5C-rate according to the ratio of the second positive electrode active material in the form of secondary particles in Examples 1 to 3 and Comparative Examples 1 to 3.

## DETAILED DESCRIPTION

Hereinafter, specific embodiments will be described in detail so that those of ordinary skill in the art can implement the present disclosure. However, this disclosure may be embodied in many different forms and is not limited to the example embodiments set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" as used herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating the average particle diameter from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of 20 particles at random in a scanning electron microscope image, each particle being assumed to have a spherical shape and the measured size being converted into an equivalent spherical diameter.

The term "$D_{10}$" means a diameter of particles whose cumulative volume corresponds to 10 volume% in the particle size distribution, and "$D_{99}$" means a diameter of particles whose cumulative volume corresponds to 99 volume% in the particle size distribution.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Composite Positive Electrode Active Material

Some example embodiments provide a composite positive electrode active material including a first positive electrode active material in a form of single particles and including a lithium nickel-based composite oxide, and a second positive electrode active material in a form of secondary particles in which a plurality of primary particles are agglomerated and including a lithium nickel-based composite oxide, wherein the first positive electrode active material is included in an

amount of more than about 50 wt% and less than about 100 wt% based on 100 wt% of the composite positive electrode active material, and the second positive electrode active material is included in an amount of greater than 0 wt% and less than about 50 wt% based on 100 wt% of the composite positive electrode active material.

Lithium nickel-based composite oxide positive electrode active materials with high specific capacity are used to achieve high energy density in batteries. The lithium nickel-based composite oxide includes secondary particles in the form of primary particles agglomerated together. However, as the number of charge and discharge cycles increases, the primary particles become misaligned due to the repeated volume expansion of the crystal structure, which thereby causes gaps between the primary particles to widen. This phenomenon causes a large difference in the degree of shrinkage and expansion of the secondary particles and the shrinkage and expansion of the positive electrode including such particles. The shrinkage and expansion causes structural cracking and destruction of secondary particles and the positive electrode, induces disconnection of the electrochemical charge transfer network, causes charge imbalance, increases the area for side reactions with the electrolyte, and causes deterioration of the charge/discharge cycle-life.

To solve such problems, research has been conducted on lithium nickel-based composite oxide positive electrode active materials in the form of single particles rather than secondary particles. In an lithium nickel-based composite oxide in the form of single particles, cracks do not occur even when as the number of charge/discharge cycles increases, which results in a high capacity retention rate and thereby overcoming the low capacity retention rate of the existing lithium nickel-based composite oxide positive electrode active material that are in the form of secondary particles.

However, as the particle size of single particles increases, lithium ion diffusion distance increases, and the ion diffusion resistance increases. And as a result, there is a limit to the particle size of single particle lithium nickel-based composite oxides. And as a result, a positive electrode active material of the lithium nickel-based composite oxide in the form of single particles has very high electrical resistance. To solve this problem, there has been an attempt to improve the electrical resistance of single particles by increasing the amount of the conductive material provided when the positive electrode is made. But then there is a problem that as the amount of the conductive material increases, the amount of the positive electrode active material relatively decreases, resulting in a decrease in the energy density.

It has been found that, per the present disclosure, by including a positive electrode active material of a lithium nickel-based composite oxide in the form of single particles and a positive electrode active material of a lithium nickel-based composite oxide in the form of secondary particles in the weight ratio described herein, excellent cycle-life characteristics and rate capability are secured while improving powder resistivity. In embodiments, the first positive electrode active material may be included in an amount of about 55 wt% to about 99 wt%, about 60 wt% to about 97 wt%, about 65 wt% to about 96 wt%, or about 70 wt% to about 95 wt%, based on 100 wt% of the composite positive electrode active material. The second positive electrode active material may be included in an amount of about 1 wt% to about 45 wt%, about 3 wt% to about 40 wt%, about 4 wt% to about 35 wt%, or about 5 wt% to about 30 wt%, based on 100 wt% of the composite positive electrode active material. When the weight of the first positive electrode active material in the form of single particles and the weight of the second positive electrode active material in the form of secondary particles are in these ranges, excellent cycle-life characteristics and rate capability can be achieved, and, at the same time, the powder resistivity may be significantly improved. If the first positive electrode active material is included in an amount of about 100 wt% based on 100 wt% of the composite positive electrode active material, that is, if only the first positive electrode active material in the form of single particles is included, cycle-life characteristics are improved, but the powder resistivity is excessively high, so that the rate capability may be inferior. If the first positive electrode active material is included in an amount of less than about 50 wt%, the amount of the second positive electrode active material may be excessively high, so that the rate capability may increase, but the cycle-life characteristics may be inferior.

The first positive electrode active material and the second positive electrode active material each include a lithium nickel-based composite oxide. The composite positive electrode active material may provide high energy density by including the first positive electrode active material and the second positive electrode active material including the lithium nickel-based composite oxide.

The lithium nickel-based composite oxide of the first positive electrode active material and the lithium nickel-based composite oxide of the second positive electrode active material may be the same or different. Each of the first and second positive electrode active materials may be represented by Chemical Formula 1.

[Chemical Formula 1] $$Li_{a1}Ni_{x1}M^1_{y1}M^2_{z1}O_{2-b1}X_{b1}$$

In Chemical Formula 1, $0.9 \leq a1 \leq 1.2$, $0.8 \leq x1 < 1$, $0 < y1 \leq 0.2$, $0 \leq z1 \leq 0.2$, $0.9 \leq x1+y1+z1 \leq 1.1$, and $0 \leq b1 \leq 0.1$, $M^1$ and $M^2$ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof, and X is F, P, S, or a combination thereof. $M^1$ and $M^2$ may be different elements. In Chemical Formula 1 according to further embodiments, $0.85 \leq x1 < 1$, $0 < y1 \leq 0.15$, and $0 \leq z1 \leq 0.15$; or $0.9 \leq x1 < 1$, $0 < y1 \leq 0.1$, and $0 \leq z1 \leq 0.1$.

In specific examples, the lithium nickel-based composite oxide of the first positive electrode active material and the lithium nickel-based composite oxide of the second positive electrode active material may each independently be represented by Chemical Formula 2 or Chemical Formula 3.

[Chemical Formula 2] $Li_{a2}Ni_{x2}Co_{y2}M^3_{z2}O_{2-b2}X_{b2}$

In Chemical Formula 2, $0.9 \le a2 \le 1.2$, $0.8 \le x2 < 1$, $0 < y2 \le 0.2$, $0 \le z2 \le 0.2$, $0.9 \le x2+y2+z2 \le 1.1$, and $0 \le b2 \le 0.1$, $M^3$ is Al, B, Ba, Ca, Ce, Cr, Cu, Fe, Mg, Mn, Mo, Nb, Si, Sn, Sr, Ti, V, W, Y, Zn, Zr, or a combination thereof, and X is F, P, S, or a combination thereof. In Chemical Formula 2 according to further embodiments, $0.9 \le x2 \le 0.99$, $0.01 \le y2 \le 0.1$, and $0 \le z2 \le 0.1$.

[Chemical Formula 3] $Li_{a3}Ni_{x3}CO_{y3}M^4_{z3}M^4_{w3}O_{2-b3}X_{b3}$

In Chemical Formula 3, $0.9 \le a3 \le 1.2$, $0.8 \le x3 \le 0.98$, $0.01 \le y3 \le 0.19$, $0.01 \le z3 \le 0.19$, $0 \le w3 \le 0.19$, $0.9 \le x3+y3+z3+w3 \le 1.1$, and $0 \le b3 \le 0.1$, $M^4$ is Al, Mn, or a combination thereof, $M^5$ is B, Ba, Ca, Ce, Cr, Cu, Fe, Mg, Mo, Nb, Si, Sn, Sr, Ti, V, W, Y, Zn, Zr, or a combination thereof, and X is F, P, S or a combination thereof. In Chemical Formula 3 according to further embodiments, $0.9 \le x3 \le 0.98$, $0.01 \le y3 \le 0.09$, $0.01 \le z3 \le 0.09$, and $0 \le w3 \le 0.09$.

The first positive electrode active material and the second positive electrode active material may each be a high-nickel positive electrode active material. The lithium nickel-based composite oxide of the first positive electrode active material and the lithium nickel-based composite oxide of the second positive electrode active material may be the same or different, and each of the positive electrode active materials have a nickel amount of greater than or equal to about 80 mol%, for example, greater than or equal to about 85 mol%, greater than or equal to about 90 mol%, greater than or equal to about 91 mol%, or greater than or equal to about 94 mol%, and less than or equal to about 99 mol%, based on 100 mol% of the total metal excluding lithium. When the nickel amount is in the above ranges, high capacity and high energy density may be achieved.

The average particle diameter ($D_{50}$) of the secondary particles of the second positive electrode active material may be greater than the average particle diameter ($D_{50}$) of the single particles of the first positive electrode active material. The first positive electrode active material may be expressed as small particles, or small single particles, and the second positive electrode active material may be expressed as large particles or large secondary particles. Here, the average particle size may be obtained by randomly measuring the size (diameter or major axis length) of 20 particles from a scanning electron microscope image of the positive electrode active materials, each particle being assumed to have a spherical shape and the measured size being converted into an equivalent spherical diameter, to obtain a particle size distribution, and taking the diameter of the particles having a cumulative volume of 50 volume% from the particle size distribution as the average particle diameter ($D_{50}$). When the small particles in the form of single particles, i.e. the first positive electrode active material, and the secondary particles in the form of secondary particles, i.e. the second positive electrode active material, are mixed and used in the aforementioned weight ratio, it is possible to secure excellent cycle-life characteristics and rate capability while improving powder resistivity.

The ratio of the average particle diameter ($D_{50}$) of the secondary particles of the second positive electrode active material to the average particle diameter ($D_{50}$) of the single particles of the first positive electrode active material may be greater than about 1, and may be, for example, about 3 to about 10, about 3 to about 9, about 4 to about 8, about 4 to about 7, about 4.5 to about 7, about 5 to about 10, about 5.5 to about 10, about 5.7 to about 10, or about 5.7 to about 7. When the ratio of the average particle diameter ($D_{50}$) of the secondary particles of the second positive electrode active material to the average particle diameter ($D_{50}$) of the single particles of the first positive electrode active material is in these ranges, the ion diffusion resistance may be controlled by increasing the lithium ion diffusion distance within the single particles, and the relatively large secondary particles can effectively improve the powder resistivity of the positive electrode active material by acting as an electron transfer path. Further, high energy density may be achieved and rate capability may be improved.

The first positive electrode active material is in the form of a single particle. Each of the single particles does not have a grain boundary within the particle, is composed of one particle, and has a monolith structure, a one body structure, or a non-agglomerated particle, in which particles are not agglomerated with each other but exist as an independent phase in terms of morphology. The single particles may be expressed as a single particle (one body particle, single grain), for example, as a single crystal. The average particle diameter ($D_{50}$) of the single particles of the first positive electrode active material may be greater than or equal to about 0.5 μm and less than about 8 μm, for example about 0.5 μm to about 7 μm, about 0.5 μm to about 6 μm, about 0.5 μm to about 5 μm, about 0.5 μm to about 4 μm, about 0.5 μm to about 3 μm, greater than or equal to about 0.5 μm and less than about 3 μm, or about 0.5 μm to about 2.8 μm. Here, the average particle diameter ($D_{50}$) may be obtained by randomly measuring the size (diameter or major axis length) of 20 particles from a scanning electron microscope image of lithium nickel-based composite oxide particles in the form of single particles, each particle being assumed to have a spherical shape and the measured size being converted into an equivalent spherical diameter, to obtain a particle size distribution, and taking the diameter of the particles having a cumulative volume of 50 volume% from the particle size distribution as the average particle diameter.

The second positive electrode active material is in the form of secondary particles in which primary particles are agglomerated. The secondary particles may be spherical, ellipsoidal, polyhedral, or irregularly-shaped, and the primary particles may be spherical, ellipsoidal, plate-shaped, or a combination thereof. The average particle diameter ($D_{50}$) of the

secondary particles of the second positive electrode active material may be about 8 μm to about 20 μm, for example, about 10 μm to about 19 μm, about 12 μm to about 18 μm, about 14 μm to about 18 μm, or about 15 μm to about 17 μm. Here, the average particle diameter ($D_{50}$) may be obtained by randomly measuring the size (diameter or major axis length) of 20 particles from a scanning electron microscope image of lithium nickel-based composite oxide particles in the form of secondary particles, each particle being assumed to have a spherical shape and the measured size being converted into an equivalent spherical diameter, to obtain a particle size distribution, and taking the diameter of the particles having a cumulative volume of 50 volume% from the particle size distribution as the average particle diameter ($D_{50}$). The size of the primary particles forming the secondary particles of the second positive electrode active material may be less than or equal to about 2 μm, and may be, for example, about 50 nm to about 2 μm, about 100 nm to about 1.5 μm, about 100 nm to about 1 μm, about 200 nm to about 800 nm, or about 300 nm to about 700 nm. The average particle size of the primary particles may be obtained by randomly measuring the size (diameter or major axis length) of 20 primary particles from a scanning electron microscope or transmission electron microscope image of the surfaces of the secondary particles, each particle being assumed to have a spherical shape and the measured size being converted into an equivalent spherical diameter, to obtain a particle size distribution, and taking the size of particles having a cumulative volume of 50 volume% from the particle size distribution as the average particle diameter ($D_{50}$).

When the average particle diameter ($D_{50}$) of the single particles of the first positive electrode active material and the secondary particles of the second positive electrode active material independently are in the above-described ranges, high capacity and high energy density may be achieved.

The aforementioned composite positive electrode active material including the first positive electrode active material in the form of single particles and the second positive electrode active material in the form of secondary particles may have the particle size distribution described below.

The $D_{10}$ of the composite positive electrode active material may be less than or equal to about 5 μm, for example, about 0.1 μm to about 4 μm, about 0.5 μm to about 3 μm, about 0.5 μm to about 2.5 μm, about 0.5 μm to about 2 μm, or about 1 μm to about 2 μm. The $D_{10}$ of the composite positive electrode active material may be obtained by using a particle size analyzer to obtain a particle size distribution of the composite positive electrode active material and then taking the diameter of particles having a cumulative volume of 10 volume% in the particle size distribution as $D_{10}$. The composite positive electrode active material may have $D_{10}$ satisfying the above ranges by mixing the first positive electrode active material and the second positive electrode active material in the above-mentioned weight ratio.

The average particle diameter ($D_{50}$) of the composite positive electrode active material may be less than or equal to about 10 μm, for example, greater than or equal to about 0.5 μm and less than about 8 μm, about 1 μm to about 7 μm, about 1.5 μm to about 6 μm, or about 2 μm to about 5 μm. The $D_{50}$ of the composite positive electrode active material may be obtained by using a particle size analyzer to obtain a particle size distribution of the composite positive electrode active material and then taking the diameter of particles having a cumulative volume of 50 volume% in the particle size distribution as $D_{50}$.

The $D_{99}$ of the composite positive electrode active material may be less than or equal to about 30 μm, for example, about 7 μm to about 30 μm, about 10 μm to about 30 μm, about 15 μm to about 30 μm, or about 20 μm to about 30 μm. The $D_{99}$ of the above composite positive electrode active material may be obtained by using a particle size analyzer to obtain a particle size distribution of the composite positive electrode active material and then taking the diameter of particles having a cumulative volume of 99 volume% in the particle size distribution as $D_{99}$. The composite positive electrode active material may have $D_{99}$ satisfying the above ranges by mixing the first positive electrode active material and the second positive electrode active material in the aforementioned weight ratio. When the second positive electrode active material is included alone or in an excessive amount exceeding the weight ratio described above, the $D_{99}$ satisfying the above ranges cannot be obtained, and the $D_{99}$ may have a value of, for example, greater than about 30 μm. And when the first positive electrode active material is included alone, the $D_{99}$ satisfying the above ranges cannot be obtained, and the $D_{99}$ may have a value of, for example, less than about 7 μm.

The $D_{50}/D_{10}$ value of the composite positive electrode active material may be about 1.85 to about 5.5, for example, about 1.85 to about 5, about 1.85 to about 4.5, about 1.85 to about 4, about 1.85 to about 3.5, about 1.85 to about 3, or about 1.85 to about 2.5. The $D_{50}/D_{10}$ of the composite positive electrode active material may be calculated by dividing $D_{50}$ by $D_{10}$, and $D_{10}$ and $D_{50}$ may be taken as the diameters corresponding to 10 volume% and 50 volume%, respectively, of the cumulative volume in the particle size distribution. The $D_{50}/D_{10}$ may represent a distance from an area where the cumulative volume is 10 volume% to an area where the cumulative volume is 50 volume%, and in the case of the composite positive electrode active material, the first positive electrode active material and the second positive electrode active material are included, and the first positive electrode active material is included in an excessive amount to satisfy the above $D_{50}/D_{10}$ ranges. If the weight ratio of the first positive electrode active material and the second positive electrode active material does not satisfy the above range, the $D_{50}/D_{10}$ value range will not be satisfied.

The $D_{99}/D_{50}$ value of the composite positive electrode active material may be about 3 to about 10, for example, about 3 to about 9, about 3.5 to about 9, about 4 to about 9, about 4.5 to about 9, about 5 to about 9, about 5.5 to about 9, about 6 to about 9, about 6.5 to about 9, about 7 to about 9, or about 7.5 to about 9. The $D_{99}/D_{50}$ of the composite positive

electrode active material may be calculated by dividing $D_{99}$ by $D_{50}$, and $D_{99}$ and $D_{50}$ may be taken as the diameters corresponding to 99 volume% and 50 volume%, respectively, of the cumulative volume in the particle size distribution. The $D_{99}/D_{50}$ may represent a distance from an area where the cumulative volume is 50 volume% to an area where the cumulative volume is 99 volume%. In the case of the composite positive electrode active material, the first positive electrode active material and the second positive electrode active material are included, and the first positive electrode active material is included in an excessive amount to satisfy the above $D_{99}/D_{50}$ range. If the weight ratio of the first positive electrode active material and the second positive electrode active material does not satisfy the above range, the $D_{99}/D_{50}$ value range will not be satisfied.

The powder resistivity of the composite positive electrode active material measured at a pressure of 50 MPa may be about 10 $\Omega \cdot$cm to about 300 $\Omega \cdot$cm, for example, about 15 $\Omega \cdot$cm to about 250 $\Omega \cdot$cm, about 19 $\Omega \cdot$cm to about 200 $\Omega \cdot$cm, about 20 $\Omega \cdot$cm to about 180 $\Omega \cdot$cm, about 20 $\Omega \cdot$cm to about 160 $\Omega \cdot$cm, or about 20 $\Omega \cdot$cm to about 140 $\Omega \cdot$cm. Additionally, the powder resistivity of the composite positive electrode active material measured at a pressure of 200 MPa may be about 1$\Omega \cdot$cm to about 35$\Omega \cdot$cm, for example, about 3$\Omega \cdot$cm to about 30$\Omega \cdot$cm, about 5$\Omega \cdot$cm to about 28$\Omega \cdot$cm, or about 7$\Omega \cdot$cm to about 25$\Omega \cdot$cm. When the first positive electrode active material in the form of single particles is used alone, cycle-life characteristics are improved because crack occurrence is suppressed. But the powder resistivity may be excessively high, which results in poor rate capability. However, by mixing a first positive electrode active material in the form of single particles and a second positive electrode active material in the form of secondary particles at an appropriate weight ratio, the composite positive electrode active material according to embodiments may improve powder resistivity compared to a positive electrode active material that is in the form of the single particles alone. The powder resistivity can be measured using, for example, a powder resistivity meter (MCP-PD600, NITTOSEIKO ANALYTECH) equipped with a 4-pin probe.

## Positive Electrode

Some embodiments of the present disclosure provide a positive electrode comprising a positive electrode current collector; and a positive electrode active material layer disposed on the positive electrode current collector, with positive electrode active material including the composite positive electrode active material described above. The positive electrode may significantly improve electrical resistance while securing excellent cycle-life characteristics and rate capability.

### Positive Electrode Current Collector

The positive electrode current collector is not limited as long as it has conductivity and does not cause an undesirable chemical change in the rechargeable lithium battery. The positive electrode current collector may be an aluminum foil or a stainless steel foil having a thickness of about 10 $\mu$m to about 15 $\mu$m.

### Positive Electrode Active Material Layer

The positive electrode active material layer includes the aforementioned composite positive electrode active material. An amount of the composite positive electrode active material may be about 60 wt% to about 99.9 wt%, about 70 wt% to about 99.8 wt%, about 80 wt% to about 99 wt%, or about 90 wt% to about 98 wt%, based on 100 wt% of the positive electrode active material layer. When the aforementioned composite positive electrode active material is included, the same effect may be achieved even with a relatively smaller amount of conductive material than with prior art positive electrode active materials. Thus, a relatively large amount of the composite positive electrode active material may be included, and the energy density may be improved.

The positive electrode active material layer may further include a binder, a conductive material, or a combination binder and conductive material.

The binder improves binding properties of composite positive electrode active material particles with one another and with a current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like. But the present disclosure is not limited to these examples.

The conductive material is included to provide electrode conductivity and any electrically conductive material may be used that does not cause an undesirable chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, an amount of the binder may be about 0.1 wt% to about 5 wt% based on 100 wt% of the positive electrode active material layer, and an amount of the conductive material may be about 0.1 wt% to about 5 wt% based on 100 wt% of the positive electrode active material layer.

The positive electrode active material layer may further include an irreversible positive electrode additive within a range that does not impede the purpose of the present disclosure in addition to the aforementioned components. The irreversible positive electrode additive is a compound that acts as a sacrificial positive electrode that can compensate for the conversion to irreversible Li that no longer participates in the charge/discharge reaction by participating in the formation of a SEI (solid electrolyte interface) film on the negative electrode surface during charging/discharging. The irreversible positive electrode additive can be decomposed during the formation process to provide Li and does not participate in the subsequent charging/discharging processes. By adding such an irreversible positive electrode additive, the consumed lithium may be replenished, thereby compensating for lithium loss and improving the energy density, cycle-life, and stability of the battery.

The irreversible positive electrode additive includes a compound that serves as a sacrificial positive electrode, such as an Fe-containing oxide, an Mn-containing oxide, and a Co-containing oxide. The Fe-containing oxide may include $Li_5FeO_4$, $LiFeO_2$, $LiFe_5O_8$, or a combination thereof. The Mn-containing oxide may include overlithiated manganese oxide, an example of which is $Li_6MnO_4$. The Co-containing oxides may include lithium cobalt oxide, and $Li_6CoO_4$ is an example thereof. Among these irreversible positive electrode additives, the Fe-containing oxide exhibits relatively superior electrochemical properties, thereby enabling effective compensation for irreversible Li and being advantageous in improving the utilization rate of the positive electrode active material.

A loading level of the positive electrode active material layer may be about 10 mg/cm$^2$ to about 30 mg/cm$^2$, and the mixture density of the positive electrode active material layer may be about 3.3 g/cm$^3$ to about 3.9 g/cm$^3$. When the loading level and mixture density of the positive electrode active material layer are in these ranges, high capacity and high energy density may be achieved. By applying the positive electrode active material, the density of the positive electrode may be increased. Also, the resistance may be lowered and the rate capability and cycle-life characteristics may be improved. Here, the mixture density of the positive electrode active material layer means the ratio of the weight to the volume of the positive electrode active material layer in the compressed positive electrode. The mixture density of the positive electrode active material layer may be obtained by measuring a cross-sectional area, thickness, and weight of the positive electrode active material layer excluding the positive electrode current collector, calculating the volume by multiplying the cross-sectional area and thickness, and dividing the weight by the volume.

The mixture resistivity of the positive electrode active material layer may be less than or equal to about 10 Ω·cm, for example, about 1 Ω·cm to about 10 Ω·cm, about 1.5 Ω·cm to about 9 Ω·cm, about 2 Ω·cm to about 8 Ω·cm, about 2.5 Ω·cm to about 7 Ω·cm, or about 3 Ω·cm to about 6 Ω·cm. In addition, the interfacial resistance between the positive electrode active material layer and the positive electrode current collector may be less than or equal to about 15 mΩ·cm$^2$, for example, about 1 mΩ·cm$^2$ to about 14 mΩ·cm$^2$, about 2 mΩ·cm$^2$ to about 13 mΩ·cm$^2$, about 3 mΩ·cm$^2$ to about 12 mΩ·cm$^2$, about 4 mΩ·cm$^2$ to about 10 mΩ·cm$^2$, or about 4 mΩ·cm$^2$ to about 8 mΩ·cm$^2$. By applying a positive electrode active material according to embodiments of the present disclosure, the mixture resistivity of the positive electrode active material layer may be lowered, and the interfacial resistance between the positive electrode active material layer and the positive electrode current collector may be significantly lowered. Also, the density may be increased and cycle-life characteristics and rate capability may be improved.

The mixture resistivity of the positive electrode active material layer and the interfacial resistance between the positive electrode active material layer and the positive electrode current collector may be measured using, for example, an RM2610 by Hioki E.E. Corporation.

## Rechargeable Lithium Battery

A rechargeable lithium battery according to embodiments of the present disclosure includes the aforementioned positive electrode, a negative electrode, and an electrolyte. The rechargeable lithium battery may include a positive electrode, a negative electrode, a separator between the positive electrode and the negative electrode, and an electrolyte.

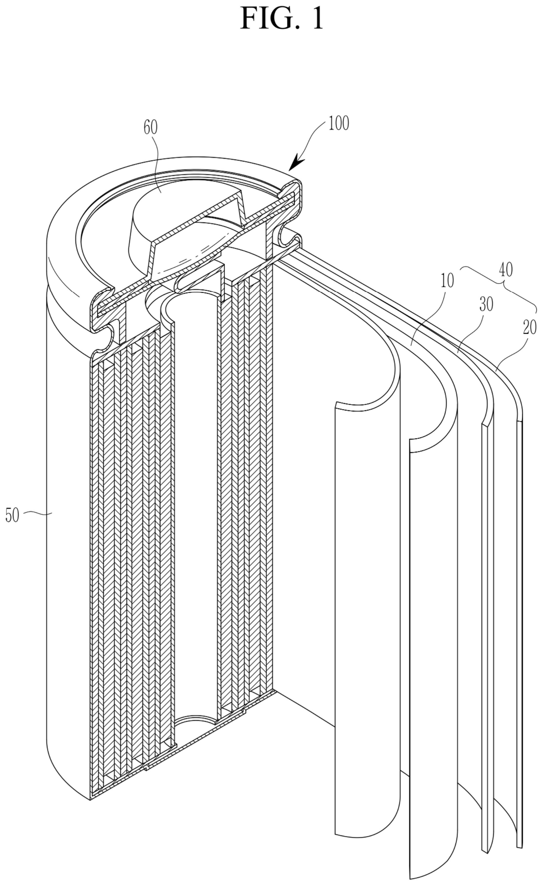

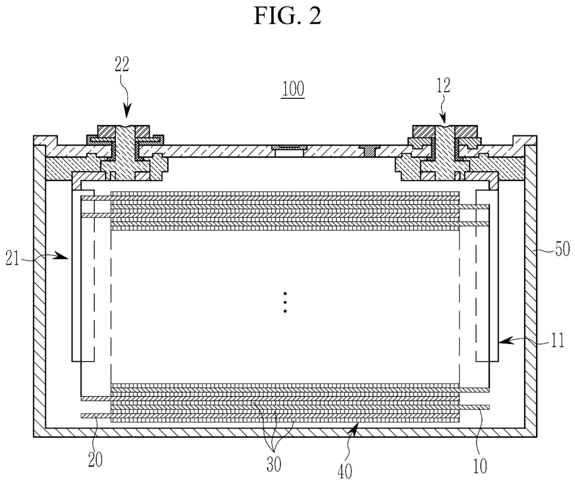

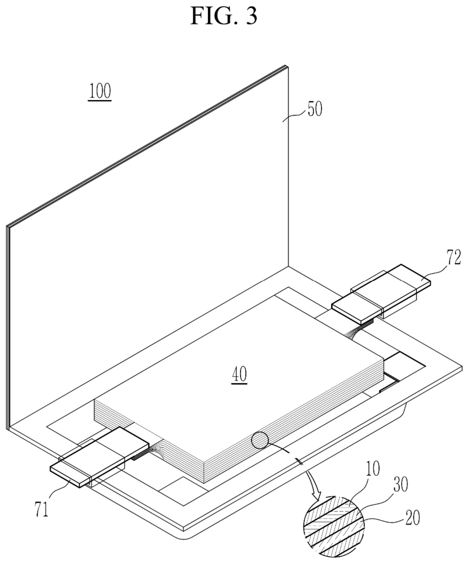

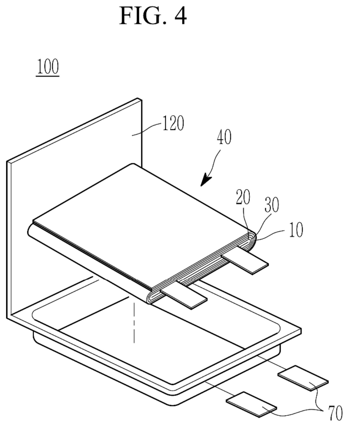

The rechargeable lithium battery may be cylindrical, prismatic, pouch-shaped, coin-shaped, etc. depending on its shape. FIGS. 1 to 4 show rechargeable lithium batteries according to embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). As shown in FIG. 1, the rechargeable lithium battery 100 may include a sealing member 60 that seals the case 50. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may include an electrode tab 70, that is, a positive electrode tab 71 and a negative electrode tab 72 serving as an

electrical path for inducing the current formed in the electrode assembly 40 to outside of the battery.

A rechargeable lithium battery according to embodiments of the present disclosure can secure excellent cycle-life characteristics and rate capability, while significantly improving the electrical resistance of the electrode, by including the above-described positive electrode.

Negative Electrode

The negative electrode for a rechargeable lithium battery includes a negative electrode current collector and a negative electrode active material layer on the negative electrode current collector. The negative electrode active material layer includes a negative electrode active material, and may also include a binder, a conductive material, or a combination thereof.

The negative electrode current collector is not limited as long as it has conductivity and does not cause an undesirable chemical change in the rechargeable lithium battery. The negative electrode current collector may be a copper foil having a thickness of about 10 μm to about 15 μm.

The negative electrode active material includes a material capable of reversibly intercalating/deintercalating lithium ions, lithium metal, an alloy of lithium metal, a material capable of doping and dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping/dedoping lithium may be a Si-based negative electrode active material or a Sn-based negative electrode active material. The Si-based negative electrode active material may be silicon, a silicon-carbon composite, SiOx ($0<x\leq 2$), a Si-Q alloy or a combination thereof. In the formula Si-Q, Q is an element selected from an alkali metal, an alkaline earth metal, a Group 13 element, a Group 14 element (excluding Si), a Group 15 element, a Group 16 element, a transition metal, a rare earth element, and a combination thereof, and for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, $SnO_2$, a Sn alloy, or a combination thereof.

The silicon-carbon composite may be a composite of silicon and amorphous carbon. The average particle diameter ($D_{50}$) of the silicon-carbon composite particles may be, for example, about 0.5 μm to about 20 μm. In some embodiments, the silicon-carbon composite may be in the form of silicon particles with amorphous carbon coated on the surfaces of the silicon particles. For example, it may include a secondary particle (core) in which silicon primary particles are assembled and an amorphous carbon coating layer (shell) provided on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, calcined coke, etc.

When the silicon-carbon composite includes silicon and amorphous carbon, an amount of the silicon may be about 10 wt% to about 50 wt%, and an amount of the amorphous carbon may be about 50 wt% to about 90 wt%, based on 100 wt% of the silicon-carbon composite. In addition, when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%, based on 100 wt% of the silicon-carbon composite.

A thickness of the amorphous carbon coating layer may be about 5 nm to about 100 nm. An average particle diameter ($D_{50}$) of the silicon particles (primary particles) may be about 10 nm to about 1 μm, or about 10 nm to about 200 nm. The silicon particles may be present as silicon alone, in the form of a silicon alloy, or in an oxidized form. The oxidized form of the silicon may be represented as $SiO_x$ where $0<x\leq 2$. The atomic content ratio of Si:O, which indicates the degree of oxidation, may be about 99:1 to about 33:67.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be about 1:99 to about 90:10 by weight.

The negative electrode active material may be included in an amount of about 90 wt% to about 99.8 wt%, or about

94 wt% to about 99 wt%, based on 100 wt% of the negative electrode active material layer.

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof

An amount of the binder may be about 0.1 wt% to about 5 wt% based on 100 wt% of the negative electrode active material layer. An amount of the conductive material may be about 0.1 wt% to about 5 wt% based on 100 wt% of the negative electrode active material layer.

Electrolyte

The electrolyte for a rechargeable lithium battery may be an electrolyte solution, which may include a non-aqueous organic solvent and a lithium salt.

The non-aqueous organic solvent functions as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, wherein R is a C2 to C20 linear, branched, or cyclic hydrocarbon group, and may a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, which is widely known to those working in the field.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbo-

nate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity. Thus, excellent performance can be achieved and lithium ions can move effectively.

Separator

Depending on the type of the rechargeable lithium battery, a separator may be present between the positive electrode and the negative electrode. The separator may include polyethylene, polypropylene, polyvinylidene fluoride, a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (for example, TEFLON®), or a copolymer or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth) acrylamide, and a second structural unit including at least one of a structural unit derived from (meth)acrylic acid or (meth) acrylate, and a structural unit derived from (meth)acrylamidosulfonic acid or a salt thereof.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof. But the present disclosure is not limited to these examples. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

A thickness of the coating layer may be about 0.5 μm to about 20 μm, for example, about 1 μm to about 10 μm, or about 1 μm to about 5 μm.

Examples and comparative examples of the present disclosure are described below. However, the following examples are only examples of the present disclosure, and the present disclosure is not limited to the following examples.

**Example 1**

(1) Preparation of Composite Positive Electrode Active Material

A first positive electrode active material including a lithium nickel-based composite oxide of $LiNi_{9.91}Co_{0.08}Al_{0.01}O_2$ in a form of single particles with an average particle diameter ($D_{50}$) of about 2.8 μm, as determined from a scanning electron microscope image by measuring sizes of 20 particles and defining the D50 as a particle diameter corresponding to a cumulative volume of 50 vol%, and a second positive electrode active material including a lithium nickel-based composite oxide of $LiNi_{0.91}Co_{0.08}Al_{0.01}O_2$ in a form of secondary particles with an average particle diameter ($D_{50}$) of about 16 μm, as determined by the same method, were mixed in a weight ratio of 70:30, preparing a composite positive electrode active material. Herein, in the composite positive electrode active material, a ratio of the average particle diameter ($D_{50}$) of the secondary particles of the second positive electrode active material to that of the single particles of the first positive electrode active material was 5.71.

(2) Manufacturing of Positive Electrode

The aforementioned composite positive electrode active material, polyvinylidene fluoride as a binder, and carbon

black as a conductive material were mixed in a weight ratio of 96:2:2 and then, dispersed in an N-methyl-2-pyrrolidone solvent to thereby prepare a slurry for forming a positive electrode active material layer. The slurry for forming a positive electrode active material layer was coated on an aluminum film and then dried and compressed to mixture density of 3.6 g/cc, making a positive electrode.

(3) Manufacturing of Rechargeable Lithium Battery Cell

The positive electrode was used with a lithium metal counter electrode as a negative electrode to manufacture a 2032-type coin half-cell. Here, a separator made of a porous polyethylene film and having a thickness of about 16 μm was disposed between the positive electrode and the lithium metal counter electrode, and an electrolyte solution was injected thereinto. The electrolyte solution was prepared by mixing ethylenecarbonate (EC) and ethylmethylcarbonate (EMC) in a volume ratio of 3:5 and dissolving 1.1 M $LiPF_6$ in the mixed solvent.

**Example 2**

A composite positive electrode active material, a positive electrode, and a rechargeable lithium battery cell were made in substantially the same manner as in Example 1, except that the weight ratio of mixing the first positive electrode active material and the second positive electrode active material was changed to 90:10.

**Example 3**

A composite positive electrode active material, a positive electrode, and a rechargeable lithium battery cell were manufactured substantially in the same manner as in Example 1 except that the weight ratio of mixing the first positive electrode active material and the second positive electrode active material was changed to 95:5.

**Comparative Example 1**

A positive electrode active material, a positive electrode, and a rechargeable lithium battery cell were made in substantially the same manner as in Example 1 except that the first positive electrode active material alone was used instead of mixing the first positive electrode active material and the second positive electrode active material.

**Comparative Example 2**

A positive electrode active material, a positive electrode, and a rechargeable lithium battery cell were made in substantially the same manner as in Example 1 except that the second positive electrode active material alone was used.

**Comparative Example 3**

A composite positive electrode active material, a positive electrode, and a rechargeable lithium battery cell were made in substantially the same manner as in Example 1 except that the weight ratio of mixing the first positive electrode active material and the second positive electrode active material was changed to 30:70.

**Evaluation Example 1: Particle Distribution Characteristics**

The composite positive electrode active materials (positive electrode active materials) according to Examples 1 to 3 and Comparative Examples 1 to 3 were analyzed with respect to particle distribution characteristics by using a particle size analyzer (PSA). The particle distributions were measured by using LS13320 by Beckmann Coulter, Inc as a laser particle size analyzer under the following analysis conditions.

<Analysis Condition>

Pump speed: 55%,
Sample ultrasonic wave dispersion: 40 KHz ultrasonic wave for 60s,
Run length: 60s,
Refractive index ratio: Sample RI 1.6,
E-factor: 1.00,

Sample amount: 0.20 g, and
Sample input dispersant: 1 ml of 10% sodium hexametaphosphate

In each particle distribution, a cumulative size of 10 volume% was denoted as $D_{10}$, a cumulative size of 50 volume% was denoted as $D_{50}$, and a cumulative size of 99 volume% was denoted as $D_{99}$. Then, $D_{50}/D_{10}$ and $D_{99}/D_{50}$ were calculated and as shown in Table 1 below. In Table 1, the $D_{50}/D_{10}$ and $D_{99}/D_{50}$ values are expressed up to a second decimal place.

(Table 1)

| | $D_{10}$ (μm) | $D_{50}$ (μm) | $D_{99}$ (μm) | $D_{50}/D_{10}$ | $D_{99}/D_{50}$ |
|---|---|---|---|---|---|
| Example 1 | 1.53 | 3.34 | 29.27 | 2.18 | 8.76 |
| Example 2 | 1.44 | 2.75 | 24.72 | 1.91 | 8.99 |
| Example 3 | 1.42 | 2.66 | 21.12 | 1.87 | 7.94 |
| Comparative Example 1 | 1.40 | 2.58 | 6.56 | 1.84 | 2.54 |
| Comparative Example 2 | 8.37 | 15.15 | 32.67 | 1.81 | 2.16 |
| Comparative Example 3 | 2.02 | 11.88 | 31.92 | 5.88 | 2.67 |

Referring to Table 1, in mixing first positive electrode active material and the second positive electrode active material, the positive electrode active materials of Examples 1 to 3, which included the first positive electrode active material in an excessive amount, exhibited $D_{10}$ and $D_{50}$ closer to those of the positive electrode active material of Comparative Example 1, which included the first positive electrode active material alone, but $D_{99}$ closer to that of the positive electrode active material of Comparative Example 2, which included the second positive electrode active material alone. This is because the first positive electrode active material as small single particles was included, the first positive electrode active material mainly existed in regions with the cumulative size of 10 volume% and 50 volume%, but the second positive electrode active material mainly existed in a region with the cumulative size of 99 volume%. On the other hand, in mixing the first positive electrode active material and the second positive electrode active material, Comparative Example 3, which included the second positive electrode active material in an excessive amount, exhibited $D_{10}$ closer to that of Comparative Example 1, which included the first positive electrode active material alone, but $D_{50}$ and $D_{99}$ closer to those of Comparative Example 2, which included the second positive electrode active material alone. The reason is that because Comparative Example 3, in which the first and second positive electrode active materials were mixed as in Examples 1 to 3, exhibited that the first positive electrode active material existed in a region with the cumulative size of 10 volume%, while the second positive electrode active material existed in a region with the cumulative size of 99 volume%, but the second positive electrode active material existed in a region with the cumulative size of 50 volume% unlike in Examples 1 to 3, there was a difference in $D_{50}$.

In other words, $D_{50}/D_{10}$ indicates a distance between the cumulative size of 10 volume% and the cumulative size of 50 volume%. Examples 1 to 3, which included the first positive electrode active material in an excessive amount, exhibited relatively small $D_{50}/D_{10}$, but Comparative Example 3, which included the second positive electrode active material in an excessive amount, exhibited that the first positive electrode active material existed in a region with the cumulative size of 10 volume%, while the second positive electrode active material existed in a region with the cumulative size 50 volume%, exhibited relatively large $D_{50}/D_{10}$.

In contrast, $D_{99}/D_{50}$ indicates a distance between the cumulative size of 50 volume% and the cumulative size of 99 volume%. Examples 1 to 3, which included the first positive electrode active material in an excessive amount, exhibited that the first positive electrode active material existed in a region with the cumulative size of 50 volume% but that the second positive electrode active material existed in a region with the cumulative size of 99 volume%, which confirmed relatively large $D_{99}/D_{50}$. But Comparative Example 3, which included the second positive electrode active material in an excessive amount, exhibited that the second positive electrode active material existed in regions with the cumulative size of 50 volume% and the cumulative size of 99 volume%, which confirmed relatively small $D_{99}/D_{50}$.

With these particle distributions, which were obtained when the first positive electrode active material and the second positive electrode active material were mixed in an appropriate weight ratio, and when the particle distributions were within an appropriate range, powder resistivity was improved.

## Evaluation Example 2: Measurement of Powder Resistivity

The composite positive electrode active materials (positive electrode active materials) according to Examples 1

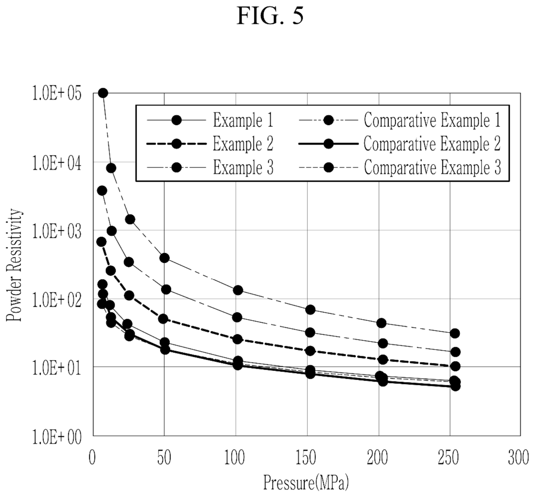

to 3 and Comparative Examples 1 to 3 were measured with respect to powder resistivity by controlling a pressure applied to powder with a powder resistivity meter (MCP-PD600, Nittoseiko Analytech Co., Ltd.) equipped with a 4-pin probe. The results are shown in Table 2 and FIG. 5.

Referring to FIG. 5, compared with Comparative Example 2, which included the second positive electrode active material alone in a form of secondary particles, Comparative Example 1, which included the first positive electrode active material alone in a form of single particles, exhibited very high resistivity. But Example 1, in which 30 wt% of the second positive electrode active material in the form of secondary particles was added to the first positive electrode active material in the form of single particles, Example 2, in which 10 wt% of the second positive electrode active material in the form of secondary particles was added to the first positive electrode active material in the form of single particles, and Example 3, in which 5 wt% of the second positive electrode active material in the form of secondary particles was added to the first positive electrode active material in the form of single particles, show that resistivity was significantly improved by including the second positive electrode active material in the form of secondary particles. On the other hand, Comparative Example 3, which included the second positive electrode active material in the form of secondary particles, exhibited equivalent or similar resistivity to Comparative Example 2, which included the second positive electrode active material alone.

## Evaluation Example 3: Evaluation of Electrical Characteristics of Positive Electrode

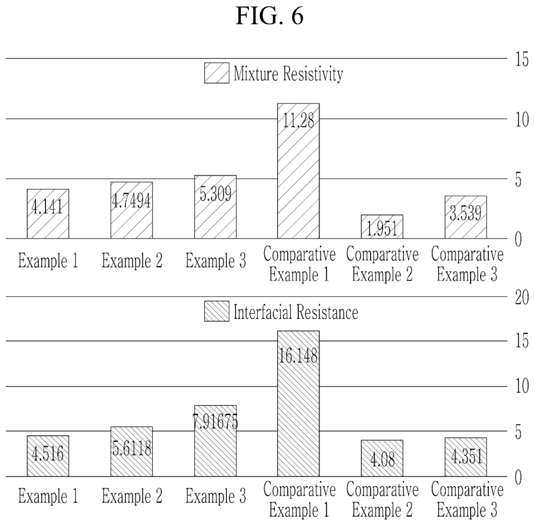

The positive electrodes according to Examples 1 to 3 and Comparative Examples 1 to 3 were measured with respect to electrical characteristics by using a Hioki RM2610 device. Specifically, positive electrode active material layer resistivity (mixture resistivity) and interfacial resistance between positive electrode active material layer and positive electrode current collector were measured. The results are shown in Table 2 and FIG. 6.

Referring to FIG. 6, like the powder resistivity, the interfacial resistance as well as the mixture resistivity was significantly improved in Examples 1 to 3, which included a small amount of the second positive electrode active material in the form of secondary particles, compared with Comparative Example 1, which included the first positive electrode active material in the form of single particles alone.

## Evaluation Example 4: Evaluation of Charge/Discharge Cycle-life Characteristics

The coin half-cells of Examples 1 to 3 and Comparative Examples 1 to 3 were evaluated with respect to rechargeable lithium battery cycle-life.

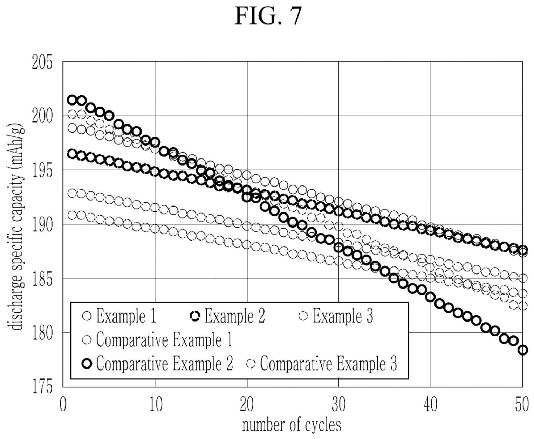

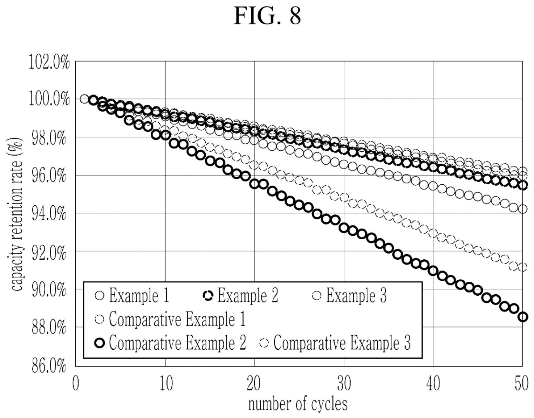

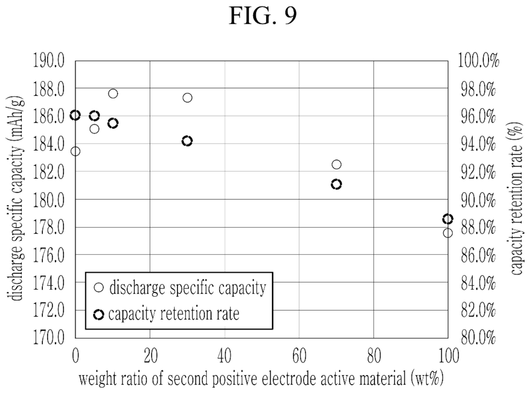

The cells were charged to an upper limit voltage of 4.35 V at a constant current of 0.2 C-rate and at the constant voltage to 0.05 C-rate, and then, the coin half-cells were discharged to a cut-off voltage of 3.0 V at the 0.2 C-rate at room temperature (25 °C) for initial charge and discharge. After the initial charge and discharge, the cells were repeatedly charged/discharged for 50 cycles at a 1.0 C-rate at room temperature (25 °C) to measure discharge specific capacity and a capacity retention rate according to the number of cycles. The results are shown in FIGS. 7 and 8, a graph of discharge specific capacity and capacity retention rate at the $50^{th}$ cycle according to a ratio of the second positive electrode active material in the form of secondary particles is shown in FIG. 9, and the results are shown in Table 2.

In Table 2, the capacity retention rate was calculated according to Equation 1.

[Equation 1] Capacity retention rate [%] = [Discharge capacity of the $50^{th}$ cycle / Discharge capacity of the $1^{st}$ cycle] $\times$ 100 [Equation 1]

Referring to FIGS. 7 and 8, Comparative Example 1, which included the first positive electrode active material in the form of single particles alone, compared with Comparative Example 2, which included the second positive electrode active material in the form of secondary particles, exhibited excellent specific capacity and capacity retention rate after the 50 cycles, but Examples 1 to 3, which used the second positive electrode active material in the form of secondary particles and the first positive electrode active material in the form of single particles in an appropriate weight ratio, exhibited significantly improved discharge specific capacity, compared with Comparative Examples 1 and 2 but a similar capacity retention rate to Comparative Example 1.

On the other hand, Comparative Example 3, which included the second positive electrode active material in an excessive amount and thereby included the first positive electrode active material in the form of single particles in a relatively reduced amount, was confirmed to exhibit similarly deteriorated discharge specific capacity and capacity retention rate after the cycle to Comparative Example 2.

Referring to FIG. 9, when the second positive electrode active material in the form of secondary particles was included in an appropriate weight, it was confirmed that discharge specific capacity and a capacity retention rate at the $50^{th}$ cycle were equivalent or better than Comparative Example 1, which included the first positive electrode active material in the form of single particles alone.

**Evaluation Example 5: Evaluation of Discharge Rate Capability**

The coin half-cells according to Examples 1 to 3 and Comparative Examples 1 to 3 were evaluated with respect to discharge rate capability of rechargeable lithium batteries.

The cells were charged to an upper limit voltage of 4.35 V at a constant current of 0.2 C-rate and at the constant voltage to 0.05C-rate and then, discharged to a cut-off voltage of 3.0 V at a 0.2 C-rate as a primary cycle at room temperature (25 °C), and this primary cycle was repeated four times (2nd to 5th cycles).

The 6th cycle was performed by charging to an upper limit voltage of 4.35 V at a constant current of 0.2 C-rate and at the constant voltage to a 0.05 C-rate and then, discharging cells to a cut-off voltage of 3.0 V at a 1.0 C-rate and then, repeated four times (7th to 10th cycles).

The 11th cycle was performed by charging to an upper limit voltage of 4.35 V at a constant current of 0.2 C-rate and at the constant voltage to 0.05 C-rate and then, discharging to a cut-off voltage of 3.0 V at a 5 C-rate, and then repeating four times (12th to 15th cycles).

The 16th cycle was performed by charging to an upper limit voltage of 4.35 V at a constant current of 0.2 C-rate and at the constant voltage to a 0.05 C-rate and then, discharging to a cut-off voltage of 3.0 V at a 0.2 C-rate, and then repeating four times (17th to 20th cycles).

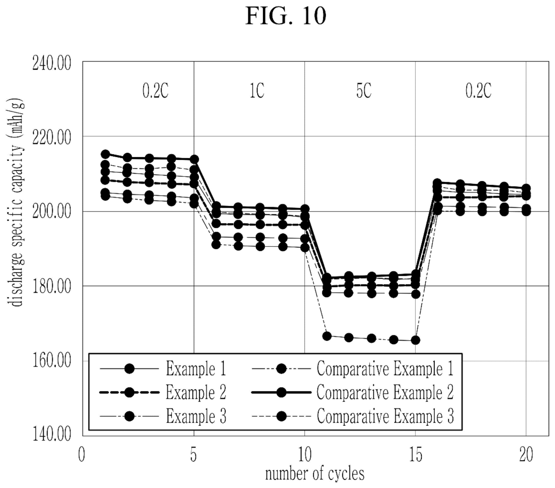

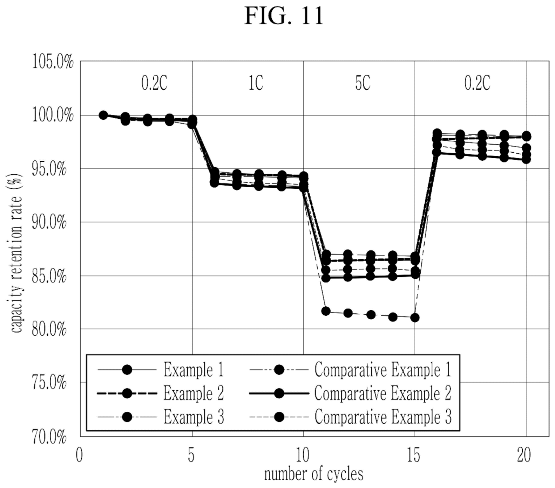

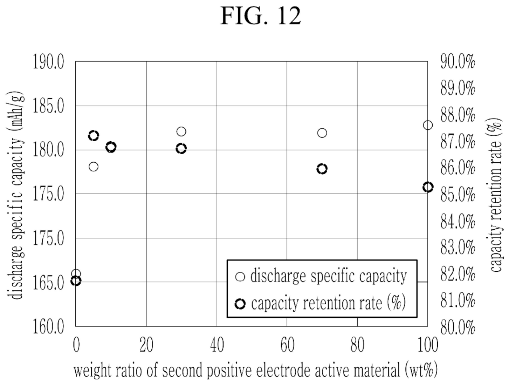

Graphs of specific capacity and a capacity retention rate according to the number of cycles are shown in FIGS. 10 and 11, and graphs of discharge specific capacity and a capacity retention rate at a 5 C-rate according to a ratio of the second positive electrode active material in the form of secondary particles are shown in FIG. 12, and the results are shown in Table 2 below.

Referring to FIGS. 10 and 11, Comparative Example 1, which included the first positive electrode active material in the form of single particles alone, was confirmed to have inferior discharge specific capacity and capacity retention rate at a 5 C-rate to Comparative Example 2, which included the second positive electrode active material in the form of secondary particles alone. But Examples 1 to 3, which used the second positive electrode active material in the form of secondary particles with the first positive electrode active material in the form of single particles in an appropriate weight ratio, exhibited significantly improved discharge specific capacity and capacity retention rate at the 5 C-rate, compared with Comparative Example 1, but Examples 1 and 2 had equivalent or better discharge specific capacity and capacity retention rate compared with Comparative Example 2.

Referring to FIG. 12, it was also confirmed that the discharge specific capacity did not increase any further, even when the second positive electrode active material in the form of secondary particles was included in an amount greater than about 30 wt% of Example 1, but Comparative Examples 2 and 3, which included an excessive amount of secondary particles, exhibited that a capacity retention rate was deteriorated.

(Table 2)

| | Powder resistivity (Ω·cm) | | Electrical Characteristics of Positive Electrode | | 5 C rate capability | | 1 C cycle-life (50 cyc) | |
|---|---|---|---|---|---|---|---|---|
| | 50 MPa | 200 MPa | Mixture resistivity (Ω·cm) | Interfacial resistance (mΩ·cm²) | Discharge specific capacity (mAh/g) | Capacity retention rate (%) | Discharge specific capacity (mAh/g) | Capacity retention rate (%) |
| Example 1 | 23.2 | 7.3 | 4.1 | 4.5 | 182.1 | 86.7 | 187.3 | 94.2 |
| Example 2 | 50.4 | 13.1 | 4.7 | 5.6 | 180.2 | 86.8 | 187.6 | 95.5 |
| Example 3 | 135.8 | 22.3 | 5.3 | 7.9 | 178.1 | 87.2 | 185.1 | 96 |
| Comparative Example 1 | 401.2 | 43.4 | 11.3 | 16.1 | 166 | 81.7 | 183.5 | 96.1 |
| Comparative Example 2 | 18.1 | 6.3 | 2.0 | 4.1 | 182.8 | 85.3 | 177.6 | 88.6 |
| Comparative Example 3 | 18.1 | 7.1 | 3.5 | 4.4 | 182 | 85.9 | 182.5 | 91.1 |

While this disclosure has been described in connection with what is presently considered to be practical example embodiments, it is to be understood that the disclosure is not limited to the disclosed embodiments. On the contrary, the disclosure includes various modifications and equivalent arrangements.

## Claims

1. A composite positive electrode active material comprising:

   a first positive electrode active material in a form of single particles and including a lithium nickel-based composite oxide, and
   a second positive electrode active material in a form of secondary particles in which primary particles are agglomerated and comprising a lithium nickel-based composite oxide,
   wherein the first positive electrode active material is included in an amount of more than 50 wt% and less than 100 wt% based on 100 wt% of the composite positive electrode active material, and
   wherein the second positive electrode active material is included in an amount of greater than 0 wt% and less than 50 wt% based on 100 wt% of the composite positive electrode active material.

2. The composite positive electrode active material as claimed in claim 1, wherein the first positive electrode active material is included in an amount of 70 wt% to 95 wt% based on 100 wt% of the composite positive electrode active material, and
   wherein the second positive electrode active material is included in an amount of 5 wt% to 30 wt% based on 100 wt% of the composite positive electrode active material.

3. The composite positive electrode active material as claimed in claim 1 or claim 2, wherein the lithium nickel-based composite oxide of the first positive electrode active material and the lithium nickel-based composite oxide of the second positive electrode active material are the same or different from each other, and
   wherein the lithium nickel-based composite oxide of the first positive electrode active material and the lithium nickel-based composite oxide of the second positive electrode active material each represented by:

   $$Li_{a1}Ni_{x1}M^1_{y1}M^2_{z1}O_{2-b1}X_{b1}$$

   where $0.9 \le a1 \le 1.2$, $0.8 \le x1 < 1$, $0 < y1 \le 0.2$, $0 \le z1 \le 0.2$, $0.9 \le x1+y1+z1 \le 1.1$, and $0 \le b1 \le 0.1$, $M^1$ and $M^2$ are different from each other, $M^1$ and $M^2$ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof, and X is F, P, S, or a combination thereof.

4. The composite positive electrode active material as claimed in any one of claims 1 to 3, wherein the lithium nickel-based composite oxide of the first positive electrode active material and the lithium nickel-based composite oxide of the second positive electrode active material are the same or different from each other, and
   wherein a nickel amount in each of the lithium nickel-based composite oxide of the first positive electrode active material and the lithium nickel-based composite oxide of the second positive electrode active material is greater than or equal to 80 mol% based on 100 mol% of metal excluding lithium.

5. The composite positive electrode active material as claimed in any one of claims 1 to 4, wherein an average particle diameter ($D_{50}$) of the secondary particles of the second positive electrode active material is greater than an average particle diameter ($D_{50}$) of the single particles of the first positive electrode active material.

6. The composite positive electrode active material as claimed in any one of claims 1 to 5, wherein a ratio of the average particle diameter ($D_{50}$) of the secondary particles of the second positive electrode active material to the average particle diameter ($D_{50}$) of the single particles of the first positive electrode active material is 3 to 10.

7. The composite positive electrode active material as claimed in any one of claims 1 to 6, wherein an average particle diameter ($D_{50}$) of the single particles of the first positive electrode active material is greater than or equal to 0.5 μm and less than 8 μm, and

   wherein an average particle diameter ($D_{50}$) of the secondary particles of the second positive electrode active material is 8 μm to 20 μm, and
   wherein an average particle diameter ($D_{50}$) of the primary particles of the second positive electrode active material is less than or equal to 2 μm.

8. The composite positive electrode active material as claimed in any one of claims 1 to 7, wherein $D_{10}$ of the composite positive electrode active material is 0.1 μm to 4 μm,

wherein an average particle diameter ($D_{50}$) of the composite positive electrode active material is greater than or equal to 0.5 μm and less than 8 μm, and
wherein $D_{99}$ of the composite positive electrode active material is 7 μm to 30 μm.

**9.** The composite positive electrode active material as claimed in any one of claims 1 to 8, wherein a $D_{50}/D_{10}$ value of the composite positive electrode active material is 1.85 to 5.5, and
wherein a $D_{99}/D_{50}$ value of the composite positive electrode active material is 3 to 10.

**10.** The composite positive electrode active material as claimed in any one of claims 1 to 9, wherein a powder resistivity of the composite positive electrode active material measured at a pressure of 50 MPa is 10 Ω·cm to 300 Ω·cm, and wherein a powder resistivity of the composite positive electrode active material measured at a pressure of 200 MPa is 1 Ω·cm to 35 Ω·cm.

**11.** A positive electrode, comprising

a positive electrode current collector, and
a positive electrode active material layer disposed on the positive electrode current collector and comprising the composite positive electrode active material as claimed in any one of claims 1 to 10.

**12.** The positive electrode as claimed in claim 11, wherein the positive electrode active material layer further comprises a binder, a conductive material, or a combination of a binder and a conductive material.

**13.** The positive electrode as claimed in claim 11 of claim 12, wherein a mixture resistivity of the positive electrode active material layer is 1 Ω·cm to 10 Ω·cm.

**14.** The positive electrode as claimed in any one of claims 11 to 13, wherein an interfacial resistance between the positive electrode active material layer and the positive electrode current collector is 1 mΩ·cm$^2$ to 14 mΩ·cm$^2$.

**15.** A rechargeable lithium battery comprising the positive electrode as claimed in any one of claims 11 to 14, a negative electrode, and an electrolyte.

# FIG. 1

60
100
40
10
30
20
50

FIG. 2

22
100
12
21
50
11
20
30
40
10

FIG. 3

100
50
72
40
10
30
20
71

FIG. 4

100
120
40
20
30
10
70

FIG. 5

1.0E+05
1.0E+04
1.0E+03
1.0E+02
1.0E+01
1.0E+00
Powder Resistivity
0
50
100
150
200
250
300
Pressure(MPa)
Example 1
Example 2
Example 3
Comparative Example 1
Comparative Example 2
Comparative Example 3

# FIG. 6

Mixture Resistivity
15
10
5
0
4.141
4.7494
5.309
11.28
1.951
3.539
Example 1
Example 2
Example 3
Comparative Example 1
Comparative Example 2
Comparative Example 3
Interfacial Resistance
20
15
10
5
0
4.516
5.6118
7.91675
16.148
4.08
4.351
Example 1
Example 2
Example 3
Comparative Example 1
Comparative Example 2
Comparative Example 3

# FIG. 7

205
200
195
190
185
180
175
discharge specific capacity (mAh/g)
0
10
20
30
40
50
number of cycles
Example 1
Example 2
Example 3
Comparative Example 1
Comparative Example 2
Comparative Example 3

FIG. 8

102.0%
100.0%
98.0%
96.0%
94.0%
92.0%
90.0%
88.0%
86.0%
capacity retention rate (%)
0
10
20
30
40
50
number of cycles
Example 1
Example 2
Example 3
Comparative Example 1
Comparative Example 2
Comparative Example 3

FIG. 9

190.0
188.0
186.0
184.0
182.0
180.0
178.0
176.0
174.0
172.0
170.0
discharge specific capacity (mAh/g)
100.0%
98.0%
96.0%
94.0%
92.0%
90.0%
88.0%
86.0%
84.0%
82.0%
80.0%
capacity retention rate (%)
0
20
40
60
80
100
weight ratio of second positive electrode active material (wt%)
discharge specific capacity
capacity retention rate

FIG. 10

240.00
220.00
200.00
180.00
160.00
140.00
discharge specific capacity (mAh/g)
0.2C
1C
5C
0.2C
Example 1
Example 2
Example 3
Comparative Example 1
Comparative Example 2
Comparative Example 3
0
5
10
15
20
number of cycles

FIG. 11

105.0%
100.0%
95.0%
90.0%
85.0%
80.0%
75.0%
70.0%
capacity retention rate (%)
0.2C
1C
5C
0.2C
0
5
10
15
20
number of cycles
Example 1
Example 2
Example 3
Comparative Example 1
Comparative Example 2
Comparative Example 3

# FIG. 12

190.0
185.0
180.0
175.0
175.0
165.0
160.0
discharge specific capacity (mAh/g)
90.0%
89.0%
88.0%
87.0%
86.0%
85.0%
84.0%
83.0%
82.0%
81.0%
80.0%
capacity retention rate (%)
0
20
40
60
80
100
weight ratio of second positive electrode active material (wt%)
discharge specific capacity
capacity retention rate (%)

# EUROPEAN SEARCH REPORT

Application Number
EP 26 15 7719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/407052 A1 (LEE YONG SEOK [KR] ET AL) 22 December 2022 (2022-12-22)<br>* example 5 *<br>----- | 1-15 | INV.<br>H01M4/131<br>H01M4/36<br>H01M4/525<br>H01M10/052 |
| A | US 2024/413298 A1 (SON JUNGWOO [KR] ET AL) 12 December 2024 (2024-12-12)<br>* the whole document *<br>----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 3 June 2026 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 7719

This annex lists the patent family members relating to the patent documents cited in the above-mentioned European search report. The members are as contained in the European Patent Office EDP file on
The European Patent Office is in no way liable for these particulars which are merely given for the purpose of information.

03-06-2026

| Patent document cited in search report | Publication date | Patent family member(s) | Publication date |
|---|---|---|---|
| US 2022407052 A1 | 22-12-2022 | CN 115472786 A | 13-12-2022 |
| | | EP 4102598 A1 | 14-12-2022 |
| | | KR 20220167037 A | 20-12-2022 |
| | | US 2022407052 A1 | 22-12-2022 |
| US 2024413298 A1 | 12-12-2024 | CN 119108501 A | 10-12-2024 |
| | | EP 4475208 A1 | 11-12-2024 |
| | | KR 20240174259 A | 17-12-2024 |
| | | US 2024413298 A1 | 12-12-2024 |

EPO FORM P0459

For more details about this annex : see Official Journal of the European Patent Office, No. 12/82